# EUROPEAN PATENT SPECIFICATION

(11) **EP 4 105 086 B1**
(45) Date of publication and mention of the grant of the patent: **20.08.2025**
(21) Application number: 21179255.1
(22) Date of filing: 14.06.2021
(51) Int. Cl.: H04L 9/40, H04W 4/44, H04W 12/71, H04W 12/50, H04W 12/08, B60R 25/24

(54) **METHOD FOR A MOBILE RELAY SYSTEM, CORRESPONDING MOBILE RELAY SYSTEM AND COMPUTER PROGRAM**
VERFAHREN FÜR EIN MOBILES RELAISSYSTEM, ENTSPRECHENDES MOBILES RELAISSYSTEM UND COMPUTERPROGRAMM
PROCÉDÉ POUR UN SYSTÈME DE RELAIS MOBILE, SYSTÈME DE RELAIS MOBILE CORRESPONDANT ET PROGRAMME INFORMATIQUE

(43) Date of publication of application: 21.12.2022
(73) Proprietor: VOLKSWAGEN AG, 38440 Wolfsburg (DE); Seat, S.A., 08760 Martorell (ES)
(72) Inventor: MONTERO BAYO, Luca, 08028 Barcelona (ES); PFADLER, Andreas, 13357 Berlin (DE)
(74) Representative: 2SPL Patentanwälte PartG mbB

(56) References cited:
- WO-A1-2020/213958
- US-A1- 2017 201 880
- US-A1- 2019 281 052
- US-A1- 2019 392 664
- US-A1- 2020 099 522
- US-A1- 2021 035 390

## Description

The present disclosure relates to the field of wireless communication. Embodiments relate to a method for a mobile relay system, a method for user equipment, a method for an application server, an apparatus, a vehicle and a computer program, more particularly, but not exclusively, to a concept for improving an establishment of a connection between the user equipment (UE) and the mobile relay system ((m)RS).

The development of the 5th-generation mobile communication standard (5G) of the 3rd-Generation Partnership Project (3GPP) has brought increased attention to the automotive industry, as vehicular communications are expected to leverage the most advanced features of the new generation of wireless communications. Among the main novelties of 5G, a wider range of usable spectrum (currently licensed up to the 28 GHz band - the first-ever Millimeter wave band for mobile use), enhanced support for high mobility scenarios and new mechanisms to guarantee and predict the experienced Quality of Service (QoS), have been established as key functions to support an increasingly connected transportation ecosystem. Besides, the latest standard release (Rel. 16) has given support to Vehicle-to-Everything (V2X) communications with New Radio (NR) technology, allegedly allowing vehicles to make use of the same spectrum options, even for Vehicle-to-Vehicle (V2V) use cases.

The use of higher frequency bands in communications implies propagating in a harsher channel, where the free-space path loss scales with the frequency squared (f²), and shading by obstacles and atmospheric effects (i.e., water vapor and oxygen absorption, or rain) take a non-negligible role.

Services relying on higher frequency systems, with their inherently high channel-induced attenuation, might find is challenging to deliver satisfactory QoS in some situations where signal power attenuation is increased, lowering the received Signal-to-Noise Ratio. This has sometimes motivated externalizing antennas for diverse services (such as 802.11p V2X, tolling, GPS and other services).

For the passengers of a vehicle using Internet services - including the driver, who might intensify their Internet use in an increasingly automatized mobility - the antennas equipped in their UE will still remain inside the vehicle, jeopardizing a stable mobile connection. As a result, some vehicles host a boosting system to wirelessly couple to the driver's UE, amplifying the signal through a wired set-up that leads to an external antenna.

It is thus worth considering that a vehicle may be equipped with a RS to manage a connection between a passenger's UE and a mobile base station. These RS may embed an internal antenna system (to communicate with passengers), an external antenna system (to communicate with infrastructure and mobile base stations), and the necessary equipment to successfully interpret the data packets sent to/from the passengers UEs for timely and reliable delivery.

US 2020 / 035 0941 A1 shows an apparatus for signal boosters for vehicles. In certain embodiments, a vehicle signal booster system includes an interior unit including a mobile station antenna that receives an RF uplink signal and transmits a boosted RF downlink signal. The vehicle signal booster system further includes a top unit including a base station antenna that receives an RF downlink signal and transmits a boosted RF uplink signal. The vehicle signal booster system further includes booster circuitry that generates the boosted RF downlink signal based on amplifying one or more downlink channels of the RF downlink signal, and that generates the boosted RF uplink signal based on amplifying one or more uplink channels of the RF uplink signal.

DE 11 201 400 5412 T5 shows a program update system that is able to verify the legitimacy of an update of a program executed on a vehicle side. An exterior device stores update data including an update control program for a control device targeted for updating and a computer program that implements means for calculating a digest value relating to the update control program, means for determining whether operation of the control device after the update is normal, and means for transmitting a result of the determination as a response.

US 2018 / 334 138 A1 shows a method of providing one or more vehicle functions at a vehicle. The method includes periodically scanning for short-range wireless communication (SRWC) devices using a SRWC chipset when the vehicle is in a powered off state. Further, the method comprises, receiving a connection request from a mobile device and establishing a SRWC connection with the mobile device using the SRWC chipset. After establishing the SRWC connection, the method further comprises authorizing the mobile device to access one or more vehicle functions.

US 2019/281052 A1 discloses a method for securing a vehicle's automotive controller network, e.g., for securing an electronic control unit on a controller area network bus. For this a security model is utilized, which is physically and communicatively coupled to an access port of a vehicle's automotive controller network. The controller network comprises among others a telematics control unit.

US 2017/201880 A1 discloses a device for secure communication between devices, such as devices within a vehicle. For example, some vehicles have integrated mobile computing platforms that enable communication with an extended productivity device. However, communication between the mobile computing platform and the extended productivity device may lack sufficient security. As such, the present disclosure provides for secure communication between the mobile computing platform and the extended productivity device by verifying, for example, an identity of the extended productivity device.

WO 2020/213958 A1 discloses a wireless power transmission device, a wireless power transmission method, a wireless power receiving device, a wireless power receiving method and a wireless power transmission system, whereby the existence or not of an inter-device communication connection history is checked using whitelist information of an out-band communication module, and when corresponding to a reconnection, out-band communication is connected, and data exchange for wireless power transmission is carried out via the out-band communication.

In the state of the art, if UE tries to connect with a RS an initial linkage process is needed, e.g. a pairing process. For example, a user enters a vehicle that comprises a RS. A network reception of UE, e.g. a smartphone of the user may be reduced due to the vehicle's structure. Thus, the UE may be connected to the vehicle's RS to improve the network reception of the UE. To do this, the UE and the RS need to establish an initial linkage. This initial linkage can be time-consuming and resource intensive. Hence, there may be a demand for an improved concept to enable a connection between UE and RS. This demand may be satisfied by the subject-matter of the appended independent and dependent claims.

The invention provides a method as defined in claim 1, a mobile relay system as defined in claim 6 and a computer program as defined in claim 7.

Preferred embodiments are defined in the dependent claims.

It is therefore a finding that establishment of a connection may be eased utilizing a whitelist. Time-consumption and/or resource intensive connection establishment or pairing procedure can then be reduced or even avoided. For example, identification for UE may be obtained and used for generating or editing a whitelist to enable the RS to establish a connection with the UE. That way, connection establishment between the RS and the UE may suffice without any further need of data transfer/exchange.

Thus, an establishment of a connection between the user equipment and the mobile relay system may be eased.

In an example, the method may further comprise scanning for the user equipment and as a result of the scanning, receiving information from the user equipment. Further, the method may comprise establishing or denying a connection between the mobile relay system and the user equipment based on the whitelist. Thus, the mobile relay system may be capable to establish solely based on the received information (e.g. a media access control address) a connection with the user equipment.

In an example, the information from the user equipment may comprise an authorization request message and wherein the method further comprises transmitting an access grant message and/or an access denial message to the user equipment. This allows the user device to request a connection in a preferred way and to be notified of a response to the request by the mobile relay system.

In an example, the scanning may comprise transmitting a pairing availability message. Thus, the user equipment can be informed in an improved way that a mobile relay system is available to improve network reception of the user equipment.

In an example, the obtained identification for the user equipment may comprise a medium access control address of the user equipment. This may allow the mobile relay system to identify the user equipment solely based on the medium access control (MAC) address of the user equipment. Thus, information needed to be transmitted by the user equipment can be reduced.

The method further comprises editing the whitelist after a trigger event to disable the mobile relay system to establish and/or maintain a connection with the user equipment and if the connection between the mobile relay system and the user equipment still exists, terminating the connection between the mobile relay system and the user equipment. Using a trigger may allow the mobile relay system to establish/terminate a connection based on desired parameters of a usage.

Some examples of apparatuses and/or methods will be described in the following by way of example only, and with reference to the accompanying figures, in which
Fig. 1 shows an example of a method for a mobile relay system;
Fig. 2 shows an example of a method for user equipment not forming part of the invention;
Fig. 3 shows an example of a method for an application server not forming part of the invention;
Fig. 4 shows a block diagram of an apparatus;
Fig. 5 shows a schematic view of a vehicle; and
Fig. 6 shows another example of a method for a mobile relay system not forming part of the invention.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

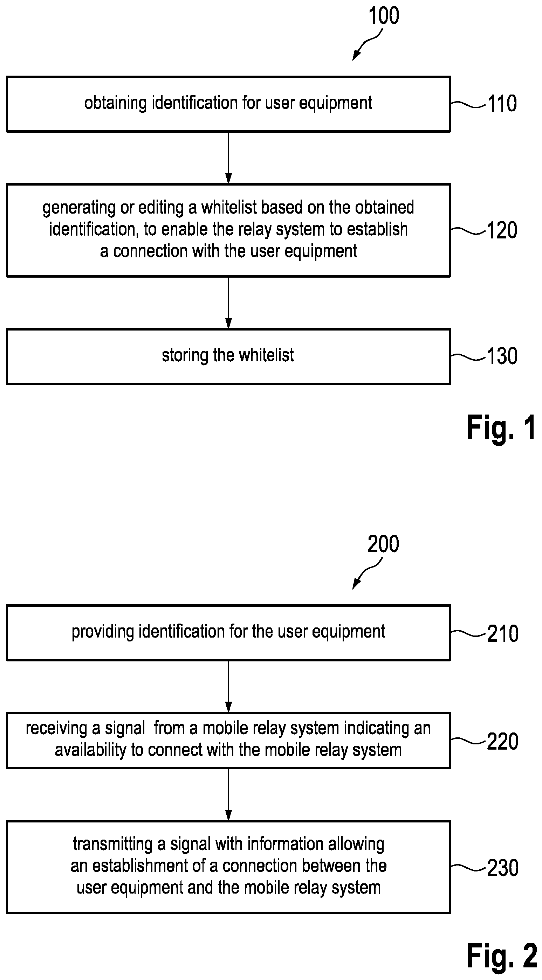

Fig. 1 shows an example of a method 100 for a mobile relay system. The method 100 comprises obtaining 110 identification for user equipment and generating or editing 120 a whitelist based on the obtained identification, to enable the mobile relay system to establish a connection with the user equipment. Further, the method 100 comprises storing 130 the whitelist. By creating or editing a whitelist an establishment of a connection between the UE and the mRS may be eased. For example, an initial linkage in which information is shared to enable communication between the UE and the mRS may be performed solely by receiving/transmitting identification for the UE.

The mRS may communicate in a mobile communication system with a base station. For example, the mRS and the base station may communicate in/via a mobile communication system. The mobile communication system may comprise a plurality of transmission points and/or base stations operable to communicate radio signals with a UE and/or mRS, such as the mRS. In an example, the mobile communication system may comprise the mRS and the UE.

A base station can be located in the fixed or stationary part of the network or system. A base station may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station can be a wireless interface of a wired network, which enables transmission and reception of radio signals to a UE, such as a UE, or mRS. Such a radio signal may comply with radio signals as, for example, standardized by 3GPP or, generally, in line with one or more of the above listed systems. Thus, a base station may correspond to a NodeB, an eNodeB, a BTS, an access point, etc. An mRS may correspond to an intermediate network node in the communication path between a base station and a UE. An mRS may forward a signal received from a UE to a base station, signals received from the base station to the mobile station transceiver, respectively.

In some examples, the mRS may also act as a small cell base station, e.g., as a pico cell or femto cell base station. The mRS acts as signal relay between the UE and a base station. In some examples, the mRS may support simultaneous connections to multiple base stations (of the same or different mobile network operators) and/or simultaneous connections to the same base station over multiple radio access technologies (e.g. a mmWave-based and a sub-6 GHz-based connection at the same). In particular, the mRS may be associated with, and thus suitable for or configured to connecting/connect to, two or more wireless base stations of two or more mobile network operators. Additionally or alternatively, the mRS may be associated with, and thus suitable for or configured to connecting/connect to, one or more base stations using two or more (different) radio access technologies. In some examples, the mRS may act as a (internet protocol-based) gateway, suitable for data communication via two or more mobile network operators and/or two or more radio access technologies.

The mobile communication system may be cellular. The term cell refers to a coverage area of radio services provided by a transmission point, a remote unit, a remote head, a remote radio head, a base station, mRS or a NodeB, an eNodeB, respectively. The terms cell and base station may be used synonymously. In some examples a cell may correspond to a sector. For example, sectors can be achieved using sector antennas, which provide a characteristic for covering an angular section around a base station or remote unit. In some examples, a base station or remote unit may, for example, operate three or six cells covering sectors of 120° (in case of three cells), 60° (in case of six cells) respectively. Likewise a mRS, such as the mRS, may establish one or more cells in its coverage area. A UE can be registered or associated with at least one cell, i.e. it can be associated to a cell such that data can be exchanged between the network and the mobile in the coverage area of the associated cell using a dedicated channel, connection or connection. A UE may hence register or be associated with a mRS, such as the mRS, or base station directly or indirectly, where an indirect registration or association may be through one or more mRS.

Various examples of the mRS may improve the cellular coverage in a vehicle. An mRS may be used in order to connect multiple terminals (e.g. multiple terminals) inside of the vehicle and provide an aggregated connection to a stationary cellular communication, for example, over one or more external vehicle antennas. In the following the connection between a stationary base station and an external antenna of a vehicle relay node may be denoted as relay or backhaul connection; the connection between a relay node and end UE will be denoted as access connection.

Such an mRS may, for example, correspond to a relay as defined in 3GPP Release 10 and following, e.g., a moving relay or mobile relay as introduced in connection with 3GPP Release 12 and following, a wireless repeater (analog or digital), or a femto cell with a wireless backhaul connection. In case of a femto cell, the wireless backhaul connection could be provided over a separate cellular communication terminal, e.g., a 2G/3G/4G/5G modem. It is another finding that for the relay connection and for the access connection, respectively, the same or different frequency and spectrum resources can be used.

In general, a UE is a device that is capable of communicating wirelessly. In particular, however, the UE may be a mobile UE, i.e., a UE that is suitable for being carried around by a user. For example, the UE may be a User Terminal (UT) or User Equipment (UE) within the meaning of the respective communication standards being used for mobile communication. For example, the UE may be a mobile phone, such as a smartphone, or another type of mobile communication device, such as a smartwatch, a laptop computer, a tablet computer, or autonomous augmented-reality glasses. For example, the UE and the mRS may be configured to communicate in a cellular mobile communication system. Accordingly the UE and the mRS may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the UE and the mRS may be configured to communicate in a mobile communication system / cellular mobile communication system. In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In addition the UE may be suitable for, or configured to, communicating/communicate via non-cellular communication systems, e.g. via a device-to-device vehicular communication system, e.g., according to the IEEE 802.11p standard (Institute of Electrical and Electronics Engineers standard 802.11p for vehicular communication) or via a wireless local area network (e.g., according to IEEE 802.11a, IEEE 802.11b, IEEE 802.11g, IEEE 802.11n, IEEE 802.11ac or IEEE 802.11ax, also known as Wi-Fi 1 through Wi-Fi 6(E)). In particular, the UE and the mRS may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

A connection between the UE and the mRS may be a wireless connection, e.g. a mmWave-based connection over the mobile communication system (e.g., using carrier frequencies of at least 20 GHz) or may be performed at lower carrier frequencies, e.g. using carrier frequencies of at most 7.5 GHz. For example, the wireless connection between the UE and the mRS may be initiated using the protocols of the mobile communication system, or using a short-range communication system, such as via a wireless local area network outlined above.

As is evident from the above example, while the communication between UE and mRS and between UE and base station primarily occurs via the mobile communication system, additional communication between the mRS and the UE, or at least from the mRS to the UE, may occur via a vehicular communication system. Such communication may be carried out directly, e.g. by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc.

Obtaining 110 the identification for the UE can be done in advance, e.g. during a booking process. For example, a user of the mRS may perform a booking process to book a service associated to the mRS, e.g. renting a vehicle or purchasing a bus ticket for public transport, where the vehicle/bus comprises an mRS. Thus, the identification for the UE can be obtained during the booking process. For example, the booking process can be performed using the UE and the identification for the UE can be determined during the booking process. The booking process can be performed using the mRS, resulting in an immediate availability of the identification for the UE for the mRS. For example, the mRS may comprise or may be connected with a user terminal, e.g. a user device in an interior of a vehicle such as an infotainment screen. Thus, by performing a booking process using the user terminal (e.g. extending a car rental period) the identification for the UE can be determined by the mRS. Alternatively or additionally, the booking process can be performed using an external device, e.g. an application server. Thus, the identification for the UE can be determined by the external device and can be transmitted to the mRS.

Further, the identification may be shared between multiple mRS, e.g. multiple vehicles or buses for public transport each comprising an mRS. For example, the identification for the UE may be obtained by a first mRS and transmitted to a second mRS (e.g. a user of a public transport network books a ticket in a first bus and needs to change to second bus during a journey) and/or obtained by e.g. an application server and transmitted to a plurality of mRS (e.g. user rents a vehicle from a vehicle fleet without further restriction to a given vehicle). Thus, a user experience can be improved, because a connection between the UE and any related mRS can be eased.

Generating or editing 120 the whitelist based on the obtained identification (for the UE), enables the mRS to establish a connection to the UE. The connection can be established using whitelisting. Whitelisting is the practice of explicitly allowing some identified entities access (e.g. the UE) to a particular privilege, service, mobility, access or recognition (e.g. the usage of the mRS). For example, the whitelist generated or edited 120 may allow the UE to establish a connection with the mRS without requiring any further information.

Storing 130 the whitelist may be performed by storing the whitelist in a storage device of the mRS. Thus, the mRS can access the whitelist as needed, e.g. when information transmitted by a user device is received.

In an example, the method 100 may further comprise scanning for the user equipment and as a result of the scanning, receiving information from the user equipment. Further, the method may comprise establishing or denying a connection between the mobile relay system and the user equipment based on the whitelist. The mRS may establish or deny a connection to the UE based on the whitelist and the received information. For example, if the information received from the UE matches an identified entity of the whitelist the UE may be connected without further process steps to the mRS. Thus, an initial linkage can be omitted by transmitting identification for the UE from the UE to the mRS.

The method 100 of the mRS is also referred as Supporting Authorization Method (SAM). The SAM may have an ability to grant or deny access for specific UEs (e.g. a UE used for a booking process). For example, the mRS may only grant a connection with a UE included in the whitelist (e.g. an obtained identified entity of the UE) and may deny access for every UE not included in the whitelist.

In an example, the information from the user equipment may comprise an authorization request message (ARM) and wherein the method further comprises transmitting an access grant message (AGM) and/or an access denial message (ADM) to the user equipment. The ARM from the UE may be required for the mRS to grant access to that specific UE. For example, the UE may repeat periodically a transmission of the ARM addressed to the mRS, e.g. after finishing a booking process (e.g. after purchasing a bus ticket). The UE may obtain information about the mRS during the booking process, which can be used for periodically transmitting the authorization request message. For example, a fee may be charged to use the mRS, and during the booking process, a user may purchase services from the mRS (e.g. a user may rent a vehicle and optionally may purchase full access to all services of the mRS). Thus, the ARM may comprise information about requested services of the mRS. This may lead to a transmission of the AGM for services an access is granted and/or a transmission of the ADM for services an access is denied (e.g. the use of the mRS can be denied altogether).

Optionally, the UE may start the periodically transmission only if a predefined parameter is fulfilled, e.g. a minimum distance between the UE and the mRS is reached (e.g. the UE is informed about a location of a rented vehicle comprising the mRS). Optionally or alternatively, the UE may start the transmission of the ARM manually, e.g. at a user's request. Thus, an energy consumption of the mRS and/or the UE can be decreased.

Optionally or alternatively, the mRS may manually or autonomously initiate the scanning for the UE (e.g. a periodic scan), e.g. a search for pairing method to listen to incoming ARM. For example, the periodic scanning can be autonomously initiated after storing 130 the whitelist. For example, the (periodic) scanning can be started manually by a user of the mRS (e.g. a driver wants to allow access for a rider) and/ or an operator of the mRS (e.g. a cab driver wants to allow access for a passenger).

The mRS may issue an AGM to specific UE, as a response to previously received ARMs or other inputs from the Authorization Protocol, to inform these specific UEs about the conditions of their granted access to the mRS. The AGM may comprise information about permanent, temporal or location-based authorization (grant) of a UE. Optionally, the AGM may comprise information about a limit or increase access capabilities (e.g. to time-frequency resource) and/or information to modify temporal or location-based access conditions. The AGM/ADM may be conditioned by the time-frequency resources allocated for the mRS. The conditions of automatic authorization may be modified from an application server.

The mRS may issue an ADM to specific UEs, as a response to previously received ARMs or other inputs from the Authorization Protocol, to inform these specific UEs about the conditions of their denied access to the mRS. Denial of access of an existing authorized UE, conditions of which may be shared in the ADM. For example, an unauthorized UE may have no access to the time-frequency resources allocated for the mRS. By transmitting the AGM/ADM by the mRS the UE can be informed about a status of the authorization request. For example, the UE may terminate the periodically transmission of the authorization request message after receiving AGM or the ADM.

In an example, the scanning may comprise transmitting a pairing availability message (PAM). The PAM from the mRS may be used inform a UE within mRS' reach about the availability to pair. The only information needed for pairing (initial linkage) may be the identification for the UE. Thus, the UE can be paired with the mRS solely by transmitting the identification for the UE by the UE to the mRS.

In an example, the obtained identification for the user equipment may comprise a medium access control address of the user equipment. Each UE may be identified by its MAC address. Thus, the identification is unique for each UE enabling an eased connection only for a desired UE.

The method furthers comprises editing the whitelist after a trigger event to disable the mobile relay system to establish and/or maintain a connection with the user equipment and if the connection between the mobile relay system and the user equipment still exists, terminating the connection between the mobile relay system and the user equipment. For example, a trigger event may be unlocking the vehicle (e.g. using a smart key), open a door of the vehicle, starting an engine of the vehicle, entering the vehicle. After such a trigger event the scanning for the UE may be started. For example, a trigger event may be the expiration of a predefined time (e.g. a renting time or validation time of a ticket for public transport), reaching a destination or reaching a data limit. After such a trigger event a connection between the UE and the mRS may be terminated.

In an example, the data shared by scanning, transmitting and/or receiving may be encrypted. For encryption standard encryption methods may be used.

In an example, the method may further comprise controlling the method by an operator. This allows the operator, e.g. to edit the whitelist. For example, the SAM (method 100) may be controlled by a master user, e.g. owner, user, driver, authorized person.

More details and aspects are mentioned in connection with the embodiments described above and/or below. The example shown in Fig. 1 may comprise one or more optional additional features corresponding to one or more aspects mentioned in connection with the proposed concept or one or more examples described below (e.g. Fig. 2 - 6).

Fig. 2 shows an example of a method 200 for user equipment. The method 200 comprises providing 210 identification for the user equipment and receiving 220 a signal from a mobile relay system indicating an availability to connect with the mobile relay system. Further, the method 200 comprises transmitting 230 a signal with information allowing an establishment of a connection between the user equipment and the mobile relay system. The method 200 may be performed in connection with the method 100 describe with reference to Fig. 1. For example, the method 200 may be performed by a UE to connect the UE with an mRS as described with reference to Fig. 1 (e.g. the mRS may simultaneously perform the method for the mRS).

In an example, the method 200 may further comprise establishing a connection between the user equipment and the mobile relay system when the user equipment measures the highest signal strength of all signals received by the user equipment for the mobile relay system. The UE may transmit an ARM if the signal strength of the mRS is the highest signal strength of all signals for mobile communication purposes received by the UE. For example, the UE may be connected with a base station of a mobile communication network and a user of the UE may enter a vehicle, resulting in a decreased signal strength of the base station, because the signal may be partially blocked by the vehicle. Thus, the UE may terminate the connection to the base station and/or establish a connection to the mRS of the vehicle to improve a performance of the mobile communication.

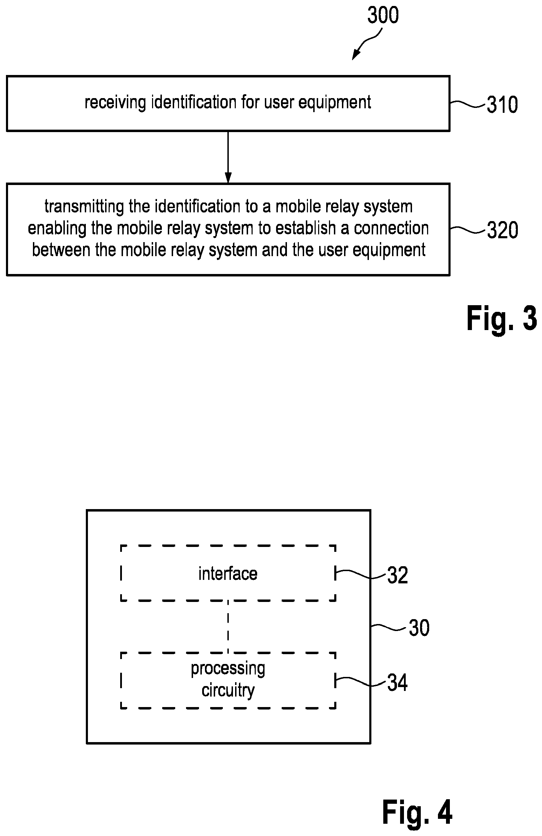

More details and aspects are mentioned in connection with the embodiments described above and/or below. The example shown in Fig. 2 may comprise one or more optional additional features corresponding to one or more aspects mentioned in connection with the proposed concept or one or more examples described above (Fig. 1) and/or below (e.g. Fig. 3 - 6).

Fig. 3 shows an example of a method 300 for an application server. The method 300 comprises receiving 310 identification for user equipment. Further, the method 300 comprises transmitting 320 the identification to a mobile relay system enabling the mobile relay system to establish a connection between the mobile relay system and the user equipment. Thus, an establishment of a connection between the user equipment and the mobile relay system may be eased.

The SAM (the method for the RS) described with reference to Fig. 1 may be accessible from an application layer, e.g. the application server. Thus, the SAM may be controlled by an operator (master user), e.g. an owner, a user, a driver or an authorized person. For example, the SAM may be controllable via backend instructions (e.g. fleet control, smartphone access), from the vehicle (e.g. such as from infotainment screens). In another example, the control of the SAM can be temporarily permitted for a third-party, e.g. each passenger inside a vehicle.

More details and aspects are mentioned in connection with the embodiments described above and/or below. The example shown in Fig. 3 may comprise one or more optional additional features corresponding to one or more aspects mentioned in connection with the proposed concept or one or more examples described above (Fig. 1 - 2) and/or below (e.g. Fig. 4 - 6).

Fig. 4 shows a block diagram of an apparatus 30. The apparatus 30 comprises one or more interfaces 32 configured to communicate with a wireless base station, user equipment and/or mobile relay system. The apparatus 30 further comprises processing circuitry 34 configured to control the one or more interfaces and to perform the method for a mobile relay system described above (e.g. for the mRS Fig.1, for the UE Fig. 2 or for the application server Fig.3).

In the claimed invention, the apparatus 30 is the mRS, where the interface is configured to communicate with a wireless base station and user equipment. Alternatively, in an embodiment not covered by the claimed invention, the apparatus 30 can be the UE, where the interface 32 is configured to communicate at least with the mRS (and optionally with an application server). Alternatively, in an embodiment not covered by the claimed invention, the apparatus 30 can be an application server, where the interface 32 is configured to communicate at least with the mRS (and optionally with UE).

As shown in Fig. 4 the respective one or more interfaces 32 are coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34.

In an embodiment the apparatus 30 may comprise a memory and at least one processing circuitry 34 operably coupled to the memory and configured to perform the below mentioned method.

In examples the one or more interfaces 32 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

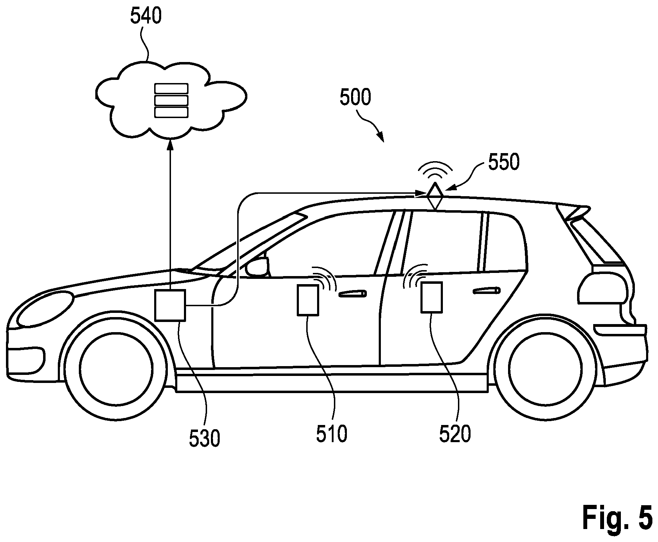

More details and aspects are mentioned in connection with the embodiments described above and/or below. The example shown in Fig. 4 may comprise one or more optional additional features corresponding to one or more aspects mentioned in connection with the proposed concept or one or more examples described above (Fig. 1 - 3) and/or below (e.g. Fig. 5 - 6).

Fig. 5 shows a schematic view of a vehicle 500. In an example, the vehicle 500 comprises the apparatus described with reference to Fig. 4. For example, the apparatus can be UE 510 of a user of the vehicle 500 (e.g. a driver or a passenger), an application server 530 (e.g. a control unit of the vehicle 500 connected to an input device of the vehicle 500) or an mRS 550. The mRS may comprise an internal antenna (e.g. inside the vehicle 500) and an external antenna (e.g. on top of a roof of the vehicle 500). Optionally, the vehicle 500 may comprise an input device, wherein the input device can be configured to control the method for a mobile relay system described above. For example, the input device can be the UE 510 or an infotainment screen (not shown) of the vehicle 500. The infotainment screen can be a part to the application server 530. For example, the input device can be the mRS 550 (e.g. a mRS 550 of a vehicle 500 parked in a parking garage, where the parking garage comprises a RS, so that the mRS 550 of the vehicle 500 may act as input device for the RS of the parking garage).

In an example, at least a part of the method may be performed in dependence of an operation state of the vehicle 500 and/or the scanning is limited to an interior of the vehicle. For example, obtaining identification information, generating or editing and storing a whitelist may be performed independently of the state of the vehicle 500 and scanning for the UE may depend on the operation state of the vehicle 500, e.g. scanning may start if an engine of the vehicle is started.

For example, the AGM/ADM may be conditioned to the UEs detection inside the cabin, or by user-triggered actions (e.g. keyless unlocking of the vehicle, engine start or opening a door).

The mRS 550 shown in Fig. 5 can be controlled by the vehicle 500 (e.g. by the control unit 530) and/or via an application server 540 (e.g. a backend server via an application layer). For example, a mRS may be a mRS 550 being hosted by a vehicle. Alternatively, a mRS may be a mRS being hosted by a vehicular infrastructure, such as a traffic light.

An example of an application of the method described above may be for a car renting company. The vehicle 500 can be a part of a fleet of rent-a-car vehicles. Thus, there may be a need for a fleet manager to maintain a mRS of each vehicle of the fleet. The fleet manager can be a master user. The fleet manager can have access to control/maintain the mRS 550 of the vehicle 500 using the application server 540. For example, the fleet manager can configure the mRS 550 to automatically identify UE 510 used for keyless entry and/or used to make a reservation of a specific vehicle, e.g. vehicle 500, via application server (as temporary driver), e.g. using an app of a rental company, a booking website or customer counter. For example, the fleet manager may have collected identification for the UE 510 with an electronic device (e.g. a tablet) at a customer counter during a booking process. The identification for the UE 510 can be transmitted to the mRS 550 and can be used to generate/edit the whitelist.

Further, the fleet manager can lease temporary manual control of SAM (the method described above) to the user of the UE 510. For example, a vehicle screen and/or a menu of the vehicle screen may be released for that specific mRS 550, e.g. an infotainment screen or a menu item of the infotainment screen for operating the mRS 550. Alternatively, the fleet manager can automatically access to the temporary driver. Thus, the mRS 550 can be adjusted in a desired way for the user of the UE 510.

After adjusting the mRS 550 (and generating/editing/storing the whitelist), the mRS 500 can establish a connection to the user's UE 510 in an eased way. The mRS 550 may start to scan for the UE 510 after a trigger event, e.g. termination of the booking process, unlocking the vehicle 500 or opening a door of the vehicle 500. The scan may be a search for pairing and may issue a PAM. The UE 510 may detect the PAM and may issue an ARM. The ARM may be automatically granted (because identification for the UE 510 is comprised in the whitelist), so that the mRS 550 and the UE 510 are at least temporarily paired. Further, the mRS 550 may issue an AGM, to inform the UE 510 about parameters of the connection, e.g. a time of usage, a time-frequency resource, a data limit, a fee or a provider the mRS 550 is connected to.

Further, a second UE 520 of the user or another user may receive the PAM. The second UE 520 may issue an ARM. Since, no identification for the second UE 520 are comprised in the whitelist an easy establishing of a connection between the UE 520 and the mRS 550 cannot be performed. Instead, for example the mRS 550 may use the input device, e.g. the infotainment screen of the UE 510 to prompt a message to manually grant or denial access for the second UE 520. The user of the UE 510 ma grant access for the second UE 520, allowing the second UE 520 and the mRS 550 to be paired in an eased way. Alternatively, the user of the UE 510 and/or the fleet manager may adjust the mRS 550 to accept all further ARM issued form a defined area (e.g. inside the vehicle 500), e.g. the ARM of the second UE 520, after the UE 510 has been connected to the mRS 550. Thus, all users of the vehicle 500 and all electronic devices of the users can establish a connection in an eased way after establishing a connection between the UE 510 and the mRS 550.

The temporary access for the UE 510 to the mRS 550 may depend on predefined conditions, e.g. renting conditions such as renting time, renting location, time-frequency resource, paid fee etc. When an access conditions is over, e.g. a renting time is expired or a return location is reached, the access for the UE 510 to the mRS 550 can be automatically denied. Further, all future attempts to connect through the mRS 550 or send an ARM by the UE 510 may be followed by a ADM.

An example of an application of the method described above may be for a privately owned taxi. An owner may own the vehicle 500 and may use it as private taxi. Further, the owner may own the UE 510. The owner may configure the mRS 550 as master user, e.g. to automatically grant access to the UE 510, to automatically search for pairing based on user triggered actions (e.g. door opening, taxi app reservation or taximeter initiation), to automatically grant temporary access to those UEs used to make a reservation via an application server (e.g. an app), e.g. conditioned to the duration of the journey or to guarantee time-frequency resource allocations for the UE 510 and limit time-frequency resources for all new connected UEs (e.g. second UE 520 of a passenger who has booked a trip by vehicle 500).

Without the need of a PAM, the UE 510 may issue an ARM to pair with the mRS 550. As UE 510 is owned by the master user, the UE 510 automatically receives an AGM with no temporary constraints.

The second UE 520 may be used to make a reservation for a trip by vehicle 500 via an app. Once the journey starts, a search for pairing may be initiated and the mRS 550 may issue a PAM. The second UE 520 detects the PAM and may issue an ARM. The ARM may be automatically granted since the identification for the second UE 520 has been obtained during the reservation. The mRS 550 may issue an AGM. The second UE 520 and the mRS 550 may be connected (paired) temporarily. For example, the mRS 550 may allocate limited time-frequency resources to the second UE. Once the trip is over, access may be automatically denied and all the future attempts of the second UE 520 to connect to the mRS 550 or send an ARM may be followed by an ADM.

The following description relates to the method as described above (e.g. Fig. 1 - 3), the corresponding apparatus (e.g. Fig. 4), and to a corresponding computer program. Features introduced in connection with the method may likewise be introduced into the corresponding apparatus.

For example, the vehicle 500 may be a land vehicle, such a road vehicle, a car, an automobile, an off-road vehicle, a motor vehicle, a bus, a robo-taxi, a van, a truck or a lorry. Alternatively, the vehicle 500 may be any other type of vehicle, such as a train, a subway train, a boat or a ship. For example, the proposed concept may be applied to public transportation (trains, bus) and future means of mobility (e.g., robo-taxis).

The mRS 550 is a counterpart to the UE 510. The UE 510 decides on whether or when to connect to the mRS 550 (e.g. based on received signal strength). Optionally, the mRS 550 supports that determination with the information outlined above. To establish the connection, and to provide the above-mentioned information, the UE 510 and the mRS 550 may communicate with each other. In this context, two types of communication may be distinguished - communication being performed before the connection establishment, and communication that occurs as part of, and after, the connection establishment.

The communication that occurs before connection establishment, and that may be used to provide said PAM, ARM, ADM, AGM etc., may be based on broadcasts of the mRS 550, e.g., via the mobile communication system and/or the vehicular communication system introduced in connection with Fig. 4. Accordingly, the mRS 550 and the UE 510, and in particular the at least one interface, may be suitable for, or configured to, communicate in/via the mobile communication system and/or the vehicular communication system. For example, the mRS 550 and the UE 510, and in particular the at least one interface, may be configured to communicate via one or more antennas placed at the outside of the vehicle via the mobile communication system or via the vehicular communication system, e.g., with other communication devices outside the vehicle, such as base stations for the purpose of maintaining wireless backhaul connections. Additionally, the mRS 550 and the UE 510, and in particular the at least one interface, may be configured to communicate via short-range communication, e.g., via a wireless local area network according to a variant of the IEEE 802.11 standard, via Bluetooth or via UWB.

In some examples, the mRS 550 may merely act as signal relay between the UE 510 and a base station. For example, after the connection has been established, the mRS 550 may repeat (and amplify) signals received from the UE 510, so they are transmitted to the base station, and repeat signals from the base station and destined for the UE 510 so they are transmitted to the UE 510. For example, such operation of the mRS 550 may be largely mobile network operator-independent, i.e., the mobile network operator may communicate directly with the UE 510, with the mRS 550 acting as a (transparent) signal relay.

In some examples, the functionality of the mRS 550 is more complex, however. For example, the mRS 550 may act as a small-cell (e.g., pico-cell or femto-cell) base station towards the UE 510, or as a data gateway. In the former case, the mRS 550 may operate one or more cells that provide cellular coverage for the UE 510 (and other UEs 520). In the latter case, merely an internet protocol (IP)-based connection may be established between the UE 510 and the mRS 550. In both cases, the mRS 550 may act as gateway for establishing a data connection for the UE 510. For example, the mRS 550 may act as gateway for establishing a data connection for the UE 510 via two or more mobile network operators and/or two or more radio access technologies.

As is evident from the above examples, various examples of the present disclosure relate to multi-MNO relaying for mobile devices in low or out of coverage. The development of 5G has brought increased attention to the automotive industry as a vertical integration expected to leverage the most advanced features of the new generation of wireless communications. Even in the case of 5G the user may face low or out of coverage situations, depending on the used sim card, i.e. coverage provided by the MNO, it uses. Consequently, a mobile device, i.e. a UE 510, 520, might experience low or out of coverage.

The proposed concept may thus use vehicles (mRS) or infrastructure elements (RS) (as powerful communication nodes) as outdoor (m)RS. The (m)RS may also be able to relay UE-base station/base station-UE (from the UE to the base station and from the base station to the UE) by using only an external antenna system, e.g., for the sake of power efficiency at the UE side. Vehicles or infrastructure elements may have multiple sim cards (multi-MNO connectivity). A vehicle might have high a QoS (Quality of Service) with at least one MNO. In general, not only a vehicle may be suitable for hosting the RS, but also infrastructure, e.g. traffic lights etc.

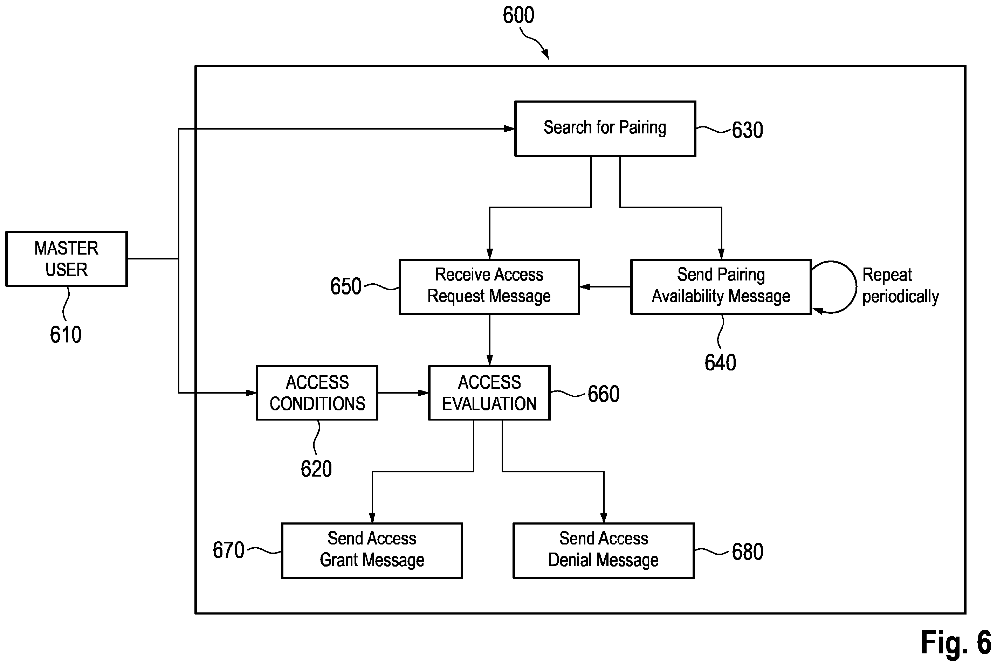

More details and aspects are mentioned in connection with the embodiments described above and/or below. The example shown in Fig. 5 may comprise one or more optional additional features corresponding to one or more aspects mentioned in connection with the proposed concept or one or more examples described above (Fig. 1 - 4) and/or below (e.g. Fig. 6).

Fig. 6 shows another example of a method 600 for a mobile relay system. The method 600 shows a workflow for supporting the SAM 600. The SAM 600 may start with an adjustment 610 of the mRS performed by e.g. a master user. The master user may adjust 620 access condition (e.g. by transmitting identification for a UE, enabling the mRS to generate/edit and store a whitelist). Further, the master user may start 630 a search for pairing (e.g. by defining a trigger event or manually starting the search for pairing of the mRS). The mRS may send 640 a PAM. Sending 640 the PAM may be repeated periodically. In response to the search for pairing and/or the PAM the mRS may receive 650 an ARM from the UE. The mRS may perform 660 an access evaluation considering the access conditions adjusted 620 adjusted by the master user. Finally, the mRS may send an AGM 670 or an ADM 680 to the UE.

More details and aspects are mentioned in connection with the embodiments described above. The example shown in Fig. 6 may comprise one or more optional additional features corresponding to one or more aspects mentioned in connection with the proposed concept or one or more examples described above (e.g. Fig. 1 - 5).

The aspects and features described in relation to a particular one of the previous examples may also be combined with one or more of the further examples to replace an identical or similar feature of that further example or to additionally introduce the features into the further example.

Examples may be compliant to or even comprised in certain standard specifications, such as those specified by the 3GPP. Configuration information may for example be communicated using signaling radio bearers, e.g. by means of Radio Resource Control (RRC) messages, which are, for example, specified in the *.331 series of 3GPP as layer 3 control plane messages. For example, physical layer specification, e.g. by means of Doppler Delay Resolutions and other physical layer specifications may also be affected by present embodiments, e.g. *.201, *.211, *.212, *.213, *.214, *.216 series in the 3GPP specifications.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim, without however departing from the scope of the invention as defined by the appended claims.

## Claims

1. A method (100) for a mobile relay system (550), acting as signal relay between UE and a base station, comprising
obtaining (110) identification for the user equipment (510; 520);
generating or editing (120) a whitelist based on the obtained identification, to enable the mobile relay system (550) to establish a connection with the user equipment (510; 520);
storing (130) the whitelist;
editing the whitelist after a trigger event to disable the mobile relay system (550) to establish and/or maintain a connection with the user equipment (510; 520); and
if the connection between the mobile relay system (550) and the user equipment (510; 520) still exists, terminating the connection between the mobile relay system (550) and the user equipment (510; 520) after the trigger event.

2. The method (100) according to claim 1, further comprising
scanning for the user equipment (510; 520); and
as a result of the scanning, receiving information from the user equipment (510; 520); and
establishing or denying a connection between the mobile relay system (550) and the user equipment (510; 520) based on the whitelist.

3. The method (100) according to claim 2, wherein
the information from the user equipment (510; 520) comprises an authorization request message and wherein the method further comprises transmitting an access grant message or an access denial message to the user equipment (510; 520).

4. The method (100) according to any one of claims 2 or 3, wherein
the scanning comprises transmitting a pairing availability message.

5. The method (100) according any one of claims 1 - 4, wherein
the obtained identification for the user equipment (510; 520) comprises a medium access control address of the user equipment (510; 520).

6. A mobile relay system (550), comprising
one or more interfaces configured to communicate with a wireless base station and user equipment (510; 520); and
processing circuitry configured to control the one or more interfaces and to perform the method (100) according to any one of claims 1 - 5.

7. A computer program having a program code for performing the method (100) according to any one of claims 1 - 5, when the computer program is executed on a computer, a processor, or a programmable hardware component of a mobile relay system (550).

## Patentansprüche

1. Verfahren (100) für ein mobiles Relaissystem (550), das als Signalrelais zwischen einer UE und einer Basisstation fungiert, umfassend das Erhalten (110) einer Kennung für die Benutzereinrichtung (510; 520);
Generieren oder Bearbeiten (120) einer Whitelist auf der Grundlage der erhaltenen Kennung, um dem mobilen Relaissystem (550) zu ermöglichen, eine Verbindung mit der Benutzereinrichtung (510; 520) herzustellen;
Speichern (130) der Whitelist;
Bearbeiten der Whitelist nach einem Auslöseereignis, um das mobile Relaissystem (550) daran zu hindern, eine Verbindung mit der Benutzereinrichtung (510; 520) herzustellen und/oder aufrechtzuerhalten; und
wenn die Verbindung zwischen dem mobilen Relaissystem (550) und der Benutzereinrichtung (510; 520) noch besteht, Beenden der Verbindung zwischen dem mobilen Relaissystem (550) und der Benutzereinrichtung (510; 520) nach dem Auslöseereignis.

2. Verfahren (100) nach Anspruch 1, ferner umfassend
Scannen nach der Benutzereinrichtung (510; 520) und
als Ergebnis des Scannens, Empfangen von Informationen von der Benutzereinrichtung (510; 520) und
Herstellen oder Ablehnen einer Verbindung zwischen dem mobilen Relaissystem (550) und der Benutzereinrichtung (510; 520) auf der Grundlage der Whitelist.

3. Verfahren (100) nach Anspruch 2, wobei
die Informationen von der Benutzereinrichtung (510; 520) eine Autorisierungsanforderungsnachricht umfassen und wobei das Verfahren ferner das Übertragen einer Zugriffsgewährungsnachricht oder einer Zugriffsverweigerungsnachricht an die Benutzereinrichtung (510; 520) umfasst.

4. Verfahren (100) nach einem der Ansprüche 2 oder 3, wobei
das Scannen das Übertragen einer Nachricht über die Verfügbarkeit des Koppelns umfasst.

5. Verfahren (100) nach einem der Ansprüche 1 bis 4, wobei
die erhaltene Kennung für die Benutzereinrichtung (510; 520) eine Mediumzugriffssteuerungsadresse der Benutzereinrichtung (510; 520) umfasst.

6. Mobiles Relaissystem (550), umfassend
eine oder mehrere Schnittstelle(n), die konfiguriert ist/sind, um mit einer drahtlosen Basisstation und der Benutzereinrichtung (510; 520) zu kommunizieren; und
Verarbeitungsschaltlogik, die konfiguriert ist, um die eine oder die mehreren Schnittstelle(n) zu steuern und das Verfahren (100) nach einem der Ansprüche 1 bis 5 durchzuführen.

7. Computerprogramm, das einen Programmcode zum Durchführen des Verfahrens (100) nach einem der Ansprüche 1 bis 5 aufweist, wenn das Computerprogramm auf einem Computer, einem Prozessor oder einer programmierbaren Hardwarekomponente eines mobilen Relaissystems (550) ausgeführt wird.

## Revendications

1. Procédé (100) pour un système de relais mobile (550), agissant comme relais de signal entre un UE et une station de base, comprenant
l'obtention (110) d'une identification pour l'équipement utilisateur (510 ; 520) ;
la génération ou l'édition (120) d'une liste d'autorisation sur la base de l'identification obtenue, afin de permettre au système de relais mobile (550) d'établir une connexion avec l'équipement utilisateur (510 ; 520) ;
le stockage (130) de la liste d'autorisation ;
l'édition de la liste d'autorisation après un évènement déclencheur pour empêcher le système de relais mobile (550) d'établir et/ou de maintenir une connexion avec l'équipement utilisateur (510 ; 520) ; et
si la connexion entre le système de relais mobile (550) et l'équipement utilisateur (510 ; 520) existe toujours, le fait de mettre fin à la connexion entre le système de relais mobile (550) et l'équipement utilisateur (510 ; 520) après l'évènement déclencheur.

2. Procédé (100) selon la revendication 1, comprenant en outre
le balayage à la recherche de l'équipement utilisateur (510 ; 520) ; et
à la suite du balayage, la réception d'informations provenant de l'équipement utilisateur (510 ; 520) ; et
le fait d'établir ou de refuser une connexion entre le système de relais mobile (550) et l'équipement utilisateur (510 ; 520) sur la base de la liste d'autorisation.

3. Procédé (100) selon la revendication 2, dans lequel
les informations provenant de l'équipement utilisateur (510 ; 520) comprennent un message de demande d'autorisation et dans lequel le procédé comprend en outre la transmission d'un message d'autorisation d'accès ou un message de refus d'accès à l'équipement utilisateur (510 ; 520).

4. Procédé (100) selon l'une quelconque des revendications 2 ou 3, dans lequel
le balayage comprend la transmission d'un message de disponibilité d'appariement.

5. Procédé (100) selon l'une quelconque des revendications 1 à 4, dans lequel
l'identification obtenue pour l'équipement utilisateur (510 ; 520) comprend une adresse de contrôle d'accès à un support de l'équipement utilisateur (510 ; 520).

6. Système de relais mobile (550), comprenant
une ou plusieurs interfaces configurées pour communiquer avec une station de base sans fil et/ou un équipement utilisateur (510 ; 520) ; et
une circuiterie de traitement configurée pour commander la ou les interfaces et pour réaliser le procédé (100) selon l'une quelconque des revendications 1 à 5.

7. Programme informatique ayant un code de programme permettant de réaliser le procédé (100) selon l'une quelconque des revendications 1 à 5, lorsque le programme informatique est exécuté sur un ordinateur, un processeur, ou un composant matériel programmable d'un système de relais mobile (550).
